# EUROPEAN PATENT APPLICATION

(11) **EP 1 628 411 A2**
(43) Date of publication of application: **22.02.2006**
(21) Application number: 05254929.2
(22) Date of filing: 06.08.2005
(51) Int. Cl.: H04B 1/713, G07C 9/00

(54) **Wireless messenger system**

(30) Priority: 18.08.2004 US 602409 P
(71) Applicant: COMPUTERIZED SECURITY SYSTEMS, INC., Troy, Michigan 48083 (US)
(72) Inventor: Khalil, Mohamad, A., Sterling Heights, MI 48310 (US)
(74) Representative: Kinsler, Maureen Catherine

(57) **Abstract**

A method of communicating between electronic door locks (12), access point hubs (14) and a central controller (22) includes the steps of transmitting a probe signal from a central controller (22) or access point hub receiver (16) to the electric door lock (12) in several different frequencies. Transmission between the lock stations (12) and the access point hub (14) are then synchronized to accommodate multiple lock stations (12) and to prevent overlapping transmissions.

## Description

### BACKGROUND OF THE INVENTION

The present invention relates to a security system, and more particularly to a method of communicating information to electronic door locks within a multi-room facility.

Multi-room facilities typically control access to rooms in the facility with electronic door locks. Electronic keys to actuate the electronic door locks provide access to the rooms in the facility. When access to a room is desired, an electronic key is programmed to actuate the electronic door lock of that room.

Programming the electronic key to the electronic lock usually requires direct access to the electronic lock. For instance, when a new resident of the room replaces a previous resident of the room the new resident is given a newly programmed key. The new resident proceeds to the room and inserts the newly programmed key into the electronic lock. The electronic lock recognizes the newly programmed key and the electronic lock reprograms accordingly. Previous versions of programmed keys may not actuate the lock, preventing the old resident of the room from accessing the room.

In some situations it is desirable to immediately cancel access to a room from a remote location. These situations may arise when an electronic key is lost or when a resident checks out of a multi-room facility. In these situations it is not desirable to reprogram the electronic lock by inserting a newly programmed key into the lock. Instead, it is desirable to control access to the room from a remote location, such as a hotel desk.

Typically, a battery powers the electronic locks. It is not desirable for the electronic locks to remain fully powered at all times. Instead, it is desirable for the electronic locks to enter a sleep mode (an energy conserving mode) when full battery power is not needed. Usually, a light combination on the electronic lock identifies low battery power; however, viewing the light combination requires direct access to the electronic lock.

Accordingly, it is desirable to provide a method of interrogating locks in a multi-room facility that provides key control, reduces battery consumption, tracks access and identifies historical usage.

### SUMMARY OF THE INVENTION

The wireless messenger system of the current invention includes a method of communicating between electronic door locks, access point hubs and a central controller. The method includes transmitting a probe signal from a electric door lock to a central controller, or access point hub receiver in several different frequencies. The access point hub detects the probe signal and transmits a probe response back to the electric door lock.

The probe signal and probe response associate the electric door lock with the receiver thereby synchronizing the electronic door lock with the central controller and access point hub. Synchronizing between the electronic door locks, the access point hub and the central controller are based on the probe signal and the probe response. The probe signal may be shorter than the frequency dwell time of the several different frequencies and the probe response may include the transmission time of the probe response.

Recording the transmission time takes place after detecting the probe signal and transmitting the probe response. Recording the transmission time partially determines the difference between the time the probe response was transmitted and the time the probe response was received. Adjustments are then made to the time of the receiver associated with the electronic lock based on the difference.

Synchronization is confirmed by monitoring a blanking period. The blanking period is of a time that is adjusted to accommodate drift between frequencies. When the electronic lock and the controller are no longer synchronized the method initiates a resynchronization.

Accordingly, the inventive method provides for interrogation and communication between electronic locks that conserves battery consumption and tracks usage. These and other features of the present invention can be best understood from the following specification and drawings, the following of which is a brief description.

### BRIEF DESCRIPTION OF THE DRAWINGS

Figure 1 is a schematic view of a security system for a multi-room facility designed according to the present invention.
Figure 2 is a schematic view of an example data packet for transmitting information according to this invention.
Figure 3 is a schematic view depicting an example method for communicating between an electronic lock and a controller according to this invention.
Figure 4 is a schematic view of an example method of synchronization according to this invention.
Figure 5 is a schematic view of and example method of collision avoidance according to this invention.

### DETAILED DESCRIPTION OF THE PREFERRED EMBODIMENT

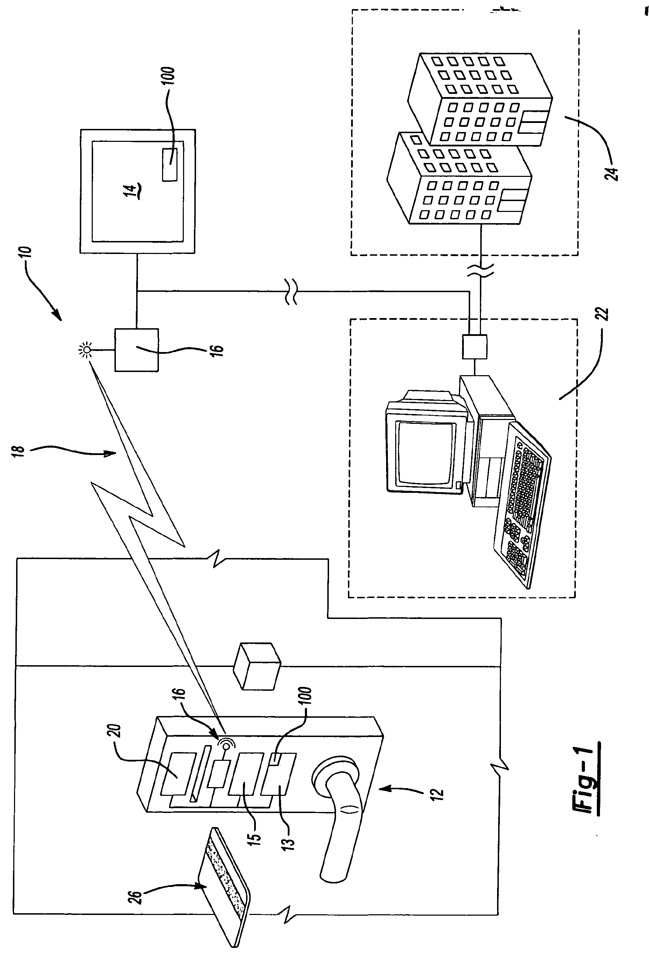

Figure 1 is a general schematic view of a security system 10 for a multi-room facility, schematically shown at 24, that utilizes radio frequency signals to communicate from multiple electronic lock stations 12 corresponding to each room of the facility 24. The system 10 includes the electronic lock stations 12 along with several access point hubs 14. Communications between the access point hub 14 and the lock stations 12 take place via a two-way radio frequency signal 18. The lock station 12 and the access point hub 14 both include a transceiver 16. The transceivers 16 send and accept the radio frequency signals 18 that are sent from either the lock stations 12 or the access point hubs 14.

The lock station 12 and the access point hub 14 communicate using a frequency hopping protocol to provide consistent and reliable communication while conserving battery power at the lock stations 12. The radio frequency signal 18 is sent according to this invention to communicate between the access point hub 14 and the lock stations 12 information indicative of lock operation and programming. Such information includes key 26 identification and tracking, historical records, and key 26 programming. As appreciated information communicated to and from the lock stations 12 can include any number and types of information. The communication method according to this invention provides for the avoidance of collisions with other radio frequency signals 18 by hopping from frequency to frequency within a predetermined frequency band.

The lock station 12 typically sends communications to the access point hub 14 relaying status of the lock station 12. For instance, the lock station 12 may need to communicate that a battery 20 powering the lock station 12 has lost power. Using the communication method of this invention, the lock station 12 communicates this information to the access point hub 14. The access point hub 14 receives and displays this information by way of central controller 22 to notify an operator of the condition of the lock station 12, i.e. in this example that the battery 20 should be replaced. The central controller 22 can display a status of multiple lock stations 12 collected from multiple access point hubs 14 in the multi-room facility 24.

The access point hub 14 also sends communications to the lock station 12. For example, it may be necessary to remotely reprogram the lock station 12 to accept a key card 26. Reprogramming can be initiated at the central controller 22, and communicated to the lock station 12 from the access point hub 14 using the communication method of the current invention.

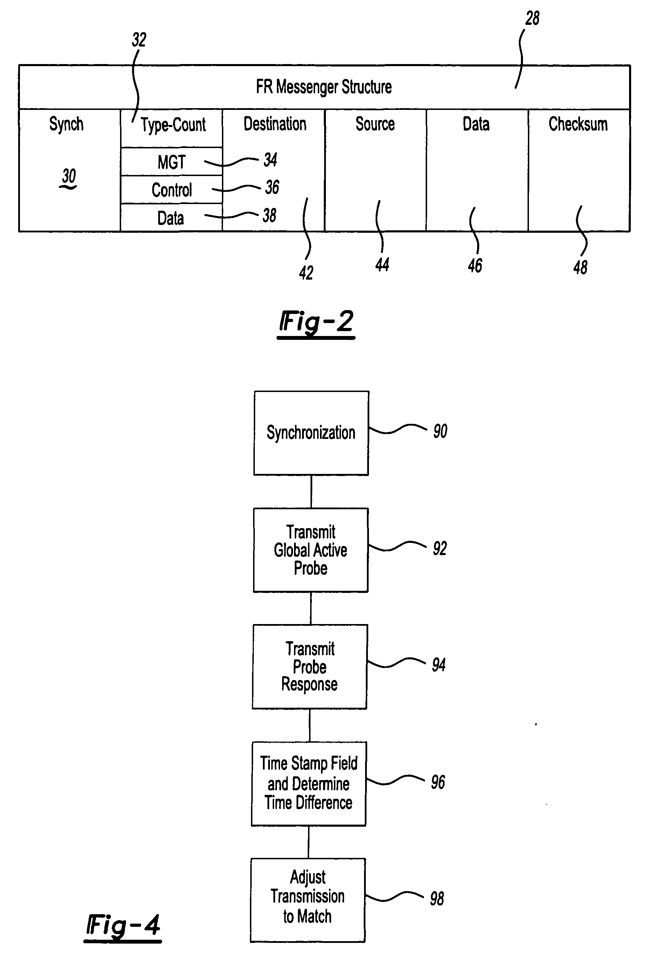

Referring to Figure 2, the radio frequency signal includes a data packet illustrated schematically at 28. The data packet 28 is sent between the electronic lock 12, the access point hub 14 and the central controller 22. The data packet 28 includes a synch field 30, and type-count field 32, a destination field 42 a source field 44 a data field 46 and a checksum field 48. The synch field 30 is a preamble field transmitted before the actual data packet 28 and intended to stabilize the transmitting device, i.e. lock station 12 or access point hub 14. Stabilizing the transmitting device reduces the possibility that the receiving device will not be synchronized once data begins being transmitted.

The type-count field 32 provides information on the type of packet that is being transmitted. Further the type-count field 32 also includes information on the number of data bytes that are contained within the data packet 28. The type of data packet can include a management packet 34 that provides for management of internal operation of the lock station 12. Such internal operations can include probe requests, probe responses association requests and response. Each of the management type packets is acknowledged by the receiving device. Another type of packet is a control packet 36 that is used to control the flow of information and commands. Such control provides instructions such as when it is clear to send as well as acknowledge response. The control packet 36 is not a type of data packet that is acknowledged. Further, packets 38 are sent to transfer data as desired between devices. The receiving device will acknowledge receipt of the packet 38.

The destination field 42 contains the address of the device to which the data packet is to be sent. The destination field 42 includes instructions on the type of device, i.e. access hub 14 or lock station 12, along with an identifier specific to an individual device. The source field 44 corresponds to the destination field 42 in that it provides information on the device that is sending the data packet 28.

The data field 46 contains information utilized to instruct and inform the receiving device, such as key codes, identification codes and history data. The checksum field 48 is transmitted at the end of the packet and provides for the validation of the integrity of the data packet 28.

The use of multiple lock stations 12 in relatively close proximity to a plurality of access hubs 14 can in some instance cause data packets 28 from various lock stations to arrive at an intended access hub 14 at the same time. The resulting data collision renders the transmission useless and such data must be resent. The way in which data is resent must be varied in some manner or subsequent collisions will occur. The communication method according to this method includes a protocol for preventing data collisions by varying the time at which data transmission are sent for subsequent data packets 28.

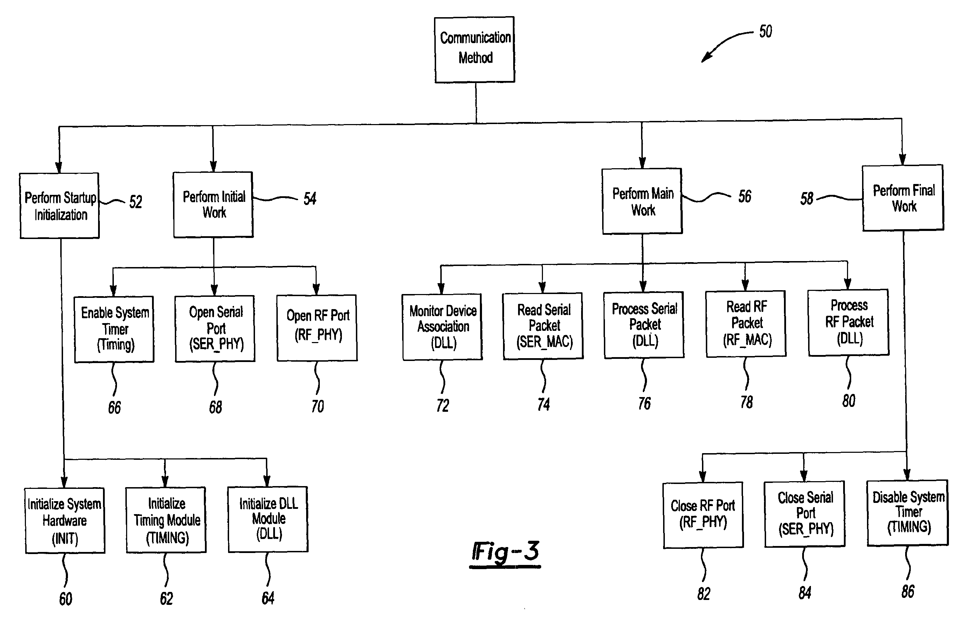

Figure 3 is a schematic that illustrates the method of communication 50 according to the current invention. An initial step is a hardware start-up initialization step 52 that provides for activating the required hardware including the electronic lock 12, the access point hub 14 and the central controller 22. As appreciated, the central controller 22 would be active at all times and therefore would only rarely be shut down such that an initialization is required. Further, the access point hubs 14 are active and infrequently require initialization. The individual lock stations 12, however, are shutdown or put into a sleep mode to conserve battery power.

The start-up initialization step 52 includes the steps of initializing the system hardware 60, initializing a timing module in the system hardware 62 and initializing a data link layer (DLL) module 64. Initializing the system hardware includes powering up the lock station 12 or the access point hub 14. A timing module is then initialized as shown at step 62 to begin timed operations for the communication protocol according to this invention. Finally, the data link layer 64 is initialized to provide the links required for the method according to this invention.

After start up initialization 52, an initial work step 54 is conducted. The initial work step 54 includes the steps of enabling the system timer 66, opening the serial communications channel 68 and opening the radio frequency communications channel 70. The enabling step for the system timer 66 prepares the communication system for receipt of radio frequency signals. The steps of opening the serial communication channel 68 and of opening the radio frequency communication channel 70 prepare the lock station 12 or the access point hub 14 for operation. As appreciated, the lock station 12 and the access point hub 14 perform many of the same initial operation functions in preparation for receiving communications.

A main work step indicated at 56 functions to process the data packets 28 received via the serial or radio frequency port. The main work step 56 includes the steps of monitoring the lock station 12 or the access point hub 14, as indicated at 72 and reading the data packets as indicated at 74. The now received data packets are processed as indicated at 76. The main work step also includes the steps of reading and processing radio frequency packets as indicated at 78 and 80.

The last step in the process comprises a final work step indicated at 58 that provides for returning the to the start-up initialization step 52. The final work step 58 includes the step of closing the RF Port 82, closing the serial port 84 and disabling the timer 86. The final work step 58 provides for the shut down of the device to prevent transmission and receipt of any signals.

The lock stations 12 operate in a reduced power mode to conserve battery power. The lock station 12 will remain dormant until either a transmission from the access point hub 14 instructs the lock station to 12 to wake up, or until a desired time passes. In an example operation of the lock station 12, the lock station 12 remains dormant and awakes to confirm communications with an access point hub 14. In some instances synchronization may be required as will be explained below. In other events, the access point hub 14 may send a transmission that awakes the lock station 12 to provide instruction. In any of these cases, the lock station 12 will continue operations for a desired time, or until activity stops, and become dormant to conserve battery power and increase the operational life of the lock station battery 20.

During operation, the method of this invention provides for the synchronization of data transmission between devices, and also prevents the collision of data packets transmitted from multiple lock stations 12 to an access point hub 14. The steps of synchronization are schematically indicated at 90, and include the initial step of sensing the access point hub 14 prior to sending a data packet 28. The synchronization or frequency hopping protocol is required to synchronize a lock station 12 with one of the plurality of access point hubs14. The process begins with the lock station 12 transmitting a global active probe as indicated at 92. The global active probe 92 includes short probe requests emitted at short durations across several different frequencies across a desired frequency range. The probe requests are utilized to search for the corresponding access point hub 12. The length of the probes is of such duration as to allow multiple probe requests to fit within a frequency dwell time used by the access point hub 14.

The access point hub 14 will respond to the probe request by transmitting a probe response as indicated at 94. A probe response is emitted back to the lock station 12 depending on the strength of the signal. As appreciated, several access point hubs 14 within the facility 24 may actually receive the probe request. However, only one will receive the signal at desired signal strength. Accordingly, only the access point hub 14 that receives the probe at the desired signal strength will transmit a probe response.

The probe response includes information required to synchronize communication between the lock station 12 and the access point hub 14. Such information includes a field containing the actual time of transmission of the probe response. The probe response is transmitted in such a manner as to avoid the introduction of timing errors potentially caused by background functions.

Upon reception of the probe response, the lock station 12 will time stamp the actual time of receipt as indicated at 96. The lock station 12 now includes a time value for the time of transmission and a time stamp for the time of receipt of the probe response. The two time values are compared to determine a difference between the time response and the time it was received taking into account the speed of communication as well as the length of the data packet transmitted. The time difference is then used to adjust the transmitter 16 to match the access point hub 14 as indicated at 98. Once this is complete the lock station 12 and the access point hub are synchronized.

The lock station 12 and the access point hub 14 remain synchronized until inherent relative inaccuracies between the two devices cause communication at different frequencies. An accommodation for such an occurrence is provided by a blanking period. The blanking period is a period that begins after a frequency switch and lasts a period determined to accommodate the maximum allowed drift between the transmission time and the receipt time. The method according to this invention includes monitoring this time and renewing the resynchronization between the two devices responsive to a detected shift.

During a resynchronization process, a directed probe request is sent instead of the global probe request sent during initial synchronization. This is possible because the specific access point hub 14 to which data is desired to be sent is known. The directed probe request is sent at the current frequency, a previous frequency or the next frequency depending on the success of resynchronization. The directed probe request utilizes information from previous successful communications to reestablish the communication link. In the event that the communication cannot be reestablished, the lock station 12 will, after a desired number of tries or time interval, will begin all over by transmitting a global probe request to begin a completely new resynchronization sequence.

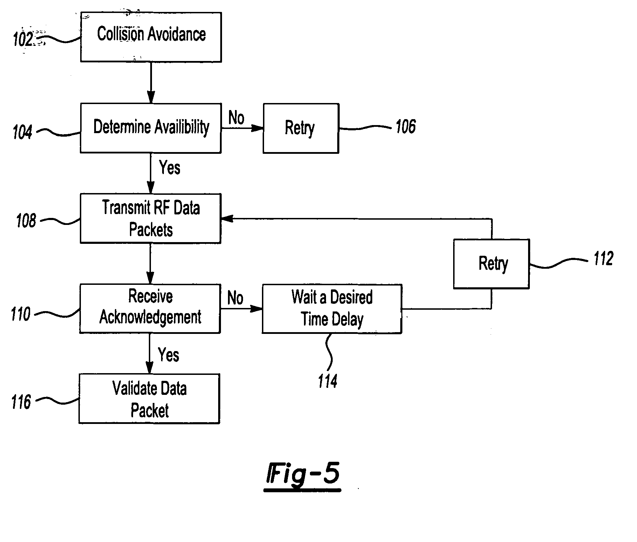

Once the communication link is established it is desired to prevent data packets from multiple lock stations 12 from being received at the access point hub 14 at the same time. Such an occurrence is called a collision and results in an incomplete transmission of the data packet 28. Incomplete transmissions are ignored and register as a problem with communication. Referring to Figure 5, an example method of collision avoidance according to this invention is illustrated and generally indicated at 102.

The collision avoidance method 102 operates to prevent data packets 28 from different lock stations 12 from arriving at the access point hub 14 at the same time, and also to accommodate situations were collisions do occur. The lock station 12 will first determine availability of the access point hub 14 as indicated at 104. Determining availability is accomplished by sensing activity of the access point hub 14. If a device is determined to be unavailable, the lock station 12 will retry until the device is available as is indicated at 106.

Once the access point hub 14 is determined to be available, the lock station transmits the data packet 28 as indicated at 108. During normal operation, the access point hub 14 will transmit an acknowledgment of receipt of the data packet 28 as indicated at 110. In the absence of such an acknowledgement, the lock station 12 will consider the transmission a failure.

Once a failure is detected the lock station will retry the transmission as indicated at 112. However, the next transmission will be transmitted at a time delay as indicated at 114. The time delay 114 is a period selected at random from a desired range. The use of the time delay for the next transmission at a random value substantially prevents subsequent sequential collisions that might occur if each lock station continued to send transmissions in a similar manner. Such a random time delay provides a better opportunity for subsequent transmission to be successful. The range of potential time delays is expanded with subsequent failed transmissions to increase the potential for completing the transmission. In other words, the time delay is initially randomly selected from a relatively small range of variables. The range of variables is increased with each try until a successful transmission is accomplished. In the event that subsequent transmission are not successful, the lock station 12 is instructed to limit the number of attempts to a desired number of attempts to prevent continuous attempts that would occur in the event that another error or problem with the lock station 12 or access point hub 14 has occurred.

Once a transmission is received that data packet 28 is validated as indicated at 116. The validation step 116 includes the sequence of a transmitted data packet 28 and an acknowledgement. The sequence is not divisible and therefore is not interrupted by transmission from other devices. The time required for the sequence places a time limitation on the time allowed for the access point hub 14 and lock station 12 to complete a transmission and validate that data packet 28. The time between transmission and acknowledgment is smaller than the time required by a lock station 12 to detect that the access point hub 14 is available to accept a transmission. This is so, such that another lock station 12 will never interpret the time between a transmission and acknowledgment as an available access point hub 14 and send a transmission, thereby causing a potential collision of data packets 28. Further, this also provides that the acknowledgment sent responsive to the transmission is related to that transmission, and not to a separate transmission sent within any idle period.

Detection of availability of the access point hub 14 is desired to allow the various lock stations 12 to communicate effectively. Accordingly, the method of this invention provides for continuous monitoring of radio frequency activity for the access point hub 14. The access point hub 14 sets a flag that is used to indicate availability. As appreciated, although the example method is described and illustrated as communication between a lock station 12 and an access point hub 14, other devices and combination are also within the contemplation of this invention, such as for example, communication between an access point hub 14 and the central controller 22, or communications from the access point hub 14 and a lock station 12.

The method and system of this invention determines idle time for the access point hub 14 by using bit time for the measurement of RF activity time. The time delays are converted to the equivalent number of RF bits then handled by counters 100 within each device. The counters 100 are continuously updated at the bit level to determine availability of the access point hub 14 or lock station 12. In addition, the use of the RF bits provides for the monitoring and updating of random back-off counter when collision errors are detected. As appreciated, the back-off counter provides time information to determine the random time delay utilized to reestablish communication.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of communicating between a plurality of electronic door lock assemblies and a controller comprising the steps of:
a) transmitting a probe signal in several different frequencies from a receiver/transmitter associated with the electronic door lock;
b) detecting the probe signal and transmitting a probe response with a transmitter and receiver associated with the controller;
c) receiving the probe response with the receiver/transmitter associated with the electronic door lock; and
d) synchronizing the electronic door lock with the controller based on the probe signal and the probe response signal.

2. The method as recited in claim 1, wherein step a) comprises a probe signal having length shorter than a frequency dwell time of the several different frequencies.

3. The method as recited in claim 1, wherein the probe response comprises a transmission time.

4. The method as recited in claim 1, wherein the step b) comprises recording the time the probe response was transmitted and determining a difference between the time the probe response was transmitted and the time the probe response was received.

5. The method as recited in claim 4, wherein the step d) comprises adjusting the time at which the receiver/transmitter associated with the electronic lock transmits based on the difference.

6. The method as recited in claim 1, including the step of monitoring a blanking period to confirm synchronization.

7. The method as recited in claim 6, wherein the blanking period is of a time determined to accommodate a maximum allowed drift between frequencies.

8. The method as recited in claim 7, including the step of initiating a resynchronization upon determining that a frequency between the electronic lock and the controller are no longer synchronized.

9. A method of communicating between a plurality of electronic door lock assemblies and a central controller, said method comprising the steps of:
a) transmitting a first radio frequency (RF) signal at a first time period by one of the central controller and one of the plurality of electronic door lock assemblies;
b) receiving the first radio signal and transmitting an acknowledgement signal to acknowledge receipt;
c) determining a non-receipt of the first RF signal in the absence of the acknowledgement signal; and
d) transmitting the first RF signal again after a second time period different than the first time period.

10. The method as recited in claim 9, where the second time period is selected from a first set of random values.

11. The method as recited in claim 10, wherein the number of time values present in the set of random values is increased with consecutive non-receipt of the first RF signal.

12. The method as recited in claim 9, where the first RF signal and the acknowledgement comprise a complete frame sequence.

13. The method as recited in claim 12, wherein the complete frame sequence includes a maximum time that is less than the time used to determine an idle state of one of the controller and one of the plurality of electronic locks.

14. The method as recited in claim 9, including the step of determining an availability of the controller for receiving a transmission from the electronic door lock.

15. The method as recited in claim 14, wherein the availability time is determined by measuring RF activity time.

16. The method as recited in claim 15, wherein the time is related to a number of RF bits that can be handled in a defined time, and the availability time is determined with respect to the determined number of RF bits.
